Europäisches Patentamt

European Patent Office

Office européen des brevets

(11) Publication number: **0 074 068**
**B1**

(12) **EUROPEAN PATENT SPECIFICATION**

(45) Date of publication of patent specification: **04.02.87**          (51) Int. Cl.⁴: **H 02 K 9/06**

(21) Application number: **82108015.7**

(22) Date of filing: **31.08.82**

(54) Cooling device of automotive alternator.

(30) Priority: **04.09.81 JP 130880/81 u**

(43) Date of publication of application:
**16.03.83 Bulletin 83/11**

(45) Publication of the grant of the patent:
**04.02.87 Bulletin 87/06**

(84) Designated Contracting States:
**DE FR GB**

(56) References cited:
**CH-A- 237 070**
**FR-A- 395 443**
**FR-A- 530 564**
**GB-A- 330 967**
**US-A-1 684 168**
**US-A-2 590 855**
**US-A-3 782 853**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Hayashi, Yoshimasa**
**4-6-1, Yokinoshita**
**Kamakura City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

The invention relates to a cooling device of an automotive alternator having a rotor shaft and a housing, the cooling device having a cooling fan surrounded by a shroud and carried by said rotor shaft, a boss section of the cooling fan being secured on said rotor shaft and carrying a plurality of radial fins.

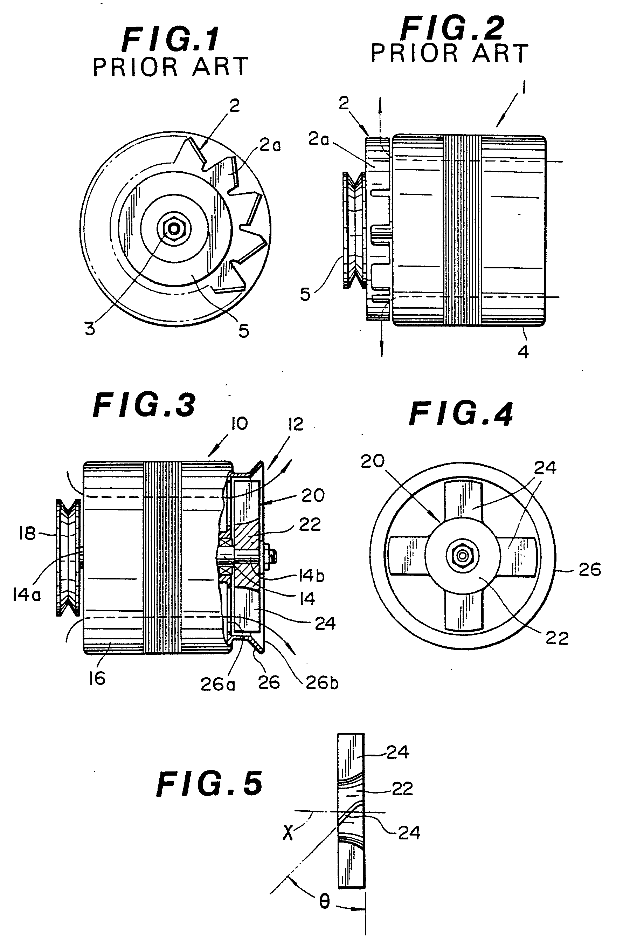

According to Figures 1 and 2, an automotive alternator 1 is shown which is provided with a cooling fan 2 of a centrifugal type having twelve or more fins 2a in order to improve its cooling ability. The fan 2 is fixedly mounted on a rotor shaft 3 of the alternator 1 and located between alternator housing 4 and a pulley 5 through which the rotor shaft 3 is rotated. Accordingly, when the cooling fan 2 rotates together with the rotor shaft 3, air is sucked into the interior of the alternator housing 4 as indicated by broken arrows to cool an alternator body (not drawn) located within the housing 4.

The rotor shaft 3 of the alternator 1 is driven at a rotational speed of about two times engine speed, thereby ensuring an electricity generating ability during low engine speed operation of an engine. As a result, when the engine is operated, for example, at an engine speed of 4000 rpm, the fundamental frequency of noise generated by the cooling fan fins 2a becomes

$$12 \times 2 \times \frac{4000}{60} = 1600 \text{ Hz}$$

in case where the number of the fins is twelve. It is to be noted that this frequency of 1600 Hz is within a particular frequency range (800—2000 Hz) which is critical from a point of view of noise reduction. Furthermore, it will be understood that the noise component of 1600 Hz extremely increases. Therefore, even if engine construction is so improved as to decrease acoustic energy emitted from the engine for the purpose of reducing engine noise, the total engine noise has not been effectively reduced because of the above-discussed considerable noise due to the cooling fan 2 of the alternator 1.

In the field of dynamo electric machines, a cooling device is known from GB—A—330 967 comprising an axial flow fan mounted on a rotary shaft. The cooling fan is of the "Aeroplane" propeller type and fixed on the rotor shaft by a hub carrying the fan blades which operate in a converging diverging fan shroud. In conjunction with further air guide means fixed on the rotor shaft for guiding air after having passed through the cooling fan, the ambient air is sucked by the fan and discharged to the interior of the electric machine in a direction away from the rotor shaft.

Problems of noise reduction are of minor importance in these cases and, in order to improve cooling conditions, cooling fans are often located at either end of the machine.

It is an object of the invention to create a cooling device of an automotive alternator which not only guarantees high cooling efficiency but also enables fan operation under considerably lowered noise emission.

According to the present invention, this task is solved with the help of a cooling fan of the mixed flow type for supplying cooling air into the interior of an alternator housing when rotated. The cooling fan includes a boss section secured on a rotor shaft of the alternator and generally in the shape of a frustum of a cone. The boss section increases in sectional area in the direction from the upstream side toward the downstream side of said cooling fan in which direction air flows when said cooling fan rotates. A plurality of fins are formed radially on the boss section so that diagonal flow of air stream develops at a location downstream of the cooling fan. Additionally, a fan shroud is disposed to surround the cooling fan and formed with upstream and downstream openings which are respectively located in the vicinity of the upstream and downstream sides of the cooling fan. The downstream opening is larger than the upstream opening. With this alternator cooling device, noise created due to the rotation of the cooling fan can be greatly reduced, while ensuring a sufficient amount of cooling air.

The features and advantages of the automotive alternator cooling device according to the present invention will be more appreciated from the following description taken in conjunction with the accompanying drawing in which the same reference numerals designate the same parts and elements, and in which:

Fig. 1 is a front view of an alternator equipped with a conventional cooling device;

Fig. 2 is a right-side view of the alternator of Fig. 1;

Fig. 3 is a side view, partly in section, of an alternator equipped with a preferred embodiment of a cooling device in accordance with the present invention;

Fig. 4 is a rear view of the alternator of Fig. 3; and

Fig. 5 is an illustration showing the detail of fins of a fan as the cooling device of Fig. 3.

Figures 3 to 5 show an automotive alternator 10 which is provided with a preferred embodiment of a cooling device 12 in accordance with the present invention. The alternator 10 includes a rotor shaft 14 passing through the interior of an alternator housing 16 and extending oppositely outwardly to form opposite extending sections 14a, 14b. A pulley 18 is securely mounted on the rotor shaft extending section 14a and driven through a V-belt (not shown) by an engine (not shown) of an automotive vehicle.

The cooling device 12 comprises a cooling fan 20 of the so-called mixed flow type wherein air flows or passes, through the fan, diagonally relative to the axis X of the fan. The cooling fan 20 is securely mounted through its boss section 22 on the rotor shaft extending section 14b. The boss section 22 is generally in the shape of a frustum of a cone and gradually increases in cross-sectional area from the upstream side of the fan 20 toward the downstream side of the same, which upstream and downstream sides are relative to the stream of air which is indicated by broken arrows in Fig. 3 and developed when the cooling fan 20 rotates with the rotor shaft 14.

A plurality of fins (four fins in this embodiment) are formed on the frustoconical peripheral surface of the boss section 22. The fins 24 are integral with the boss section 22 and formed angularly relative to the axis X of the fan 22 as best shown in Fig. 5. An angle θ of each fin 24, relative to an imaginary plane to which the fan axis X is perpendicular, is set, for example, at 45 degrees, and additionally so set that the angle of attack becomes, for example, 45 degrees or more so that air stream at a location downstream of the cooling fan 20 becomes so-called diagonal flow whose flowing direction is diagonal relative the rotor shaft axis X. The angle of attack is preferably 65 degrees. A generally annular fan-shroud 26 is disposed to surround the outer periphery of the cooling fan 20 in a manner that the tip end of each fan fin 24 faces the inner surface of the fan-shroud 26. The fan-shroud 26 is secured to the downstream side of the alternator housing 16 and formed with an upstream side opening 26a located in the vicinity of the upstream side of the cooling fan 20, and a downstream side opening 26b located in the vicinity of the downstream side of the cooling fan 20. As shown, the downstream side opening 26a is larger in sectional area than the upstream side opening 26a. In other words, the downstream periphery of the fan-shroud 26 is widened as compared with the upstream side periphery of the same.

With the thus arranged cooling device 12 of the alternator 10, when the cooling fan 20 rotates with the rotor shaft 14 of the alternator 10, cooling air is sucked and passes through the interior of the alternator housing 16 as indicated by the broken arrows in Fig. 3 to cool an alternator body (not shown) disposed within the casing 16. Air stream having passed through the casing interior becomes diagonal flow and be discharged to be widened toward the end, after passing through the cooling fan 20.

Additionally, since the fan-shroud 26 is formed to be widened and the cooling fan boss section 22 is bulged toward the downstream side of the fan 20, the formation of diagonal flow of the discharged cooling air stream can be effectively promoted.

Furthermore, since a so-called mixed flow fan is used as the cooling fan 20 in the present invention, it has become possible to take a larger angle of attack (of 45 degrees or more), thereby enabling to obtain a sufficient amount of cooling air even if the number of fins 24 of the fan 20 is smaller. This has been confirmed by the inventors. Accordingly, in the case where the number of the fins 24 is four as in the above-mentioned embodiment, the fundamental frequency of noise generated by the cooling fan 20 becomes

$$4 \times 2 \times \frac{4000}{60} = 533 \text{ Hz}$$

when the engine runs at an engine speed of 4000 rpm. This noise fundamental frequency is considerably lower than the noise frequency range (800—2000 Hz) which is critical in engine noise control, thus effectively achieving total engine noise reduction. In this connection, in conventional alternator cooling devices in which so-called centrifugal fan is used as its cooling fan, a larger angle of attack cannot be taken in order to prevent air stream from breaking away and stalling. Therefore, in order to obtain a sufficient amount of cooling air, it is necessary to increase the number of fins as compared with that in the present invention. The thus increased number of fins greatly contributes to develop noise having frequency within the above-mentioned critical noise frequency range.

While the cooling fan 20 has been shown and described as being disposed at the rear end of the alternator casing 16 in the above-discussed embodiment, it will be understood that it may be disposed between the drive pulley 18 and the front end of the alternator casing 16 in which cooling air stream direction is reverse relative to that indicated in Fig. 3. It is preferable that the boss section 22 and the fins 24 are integrally formed as a one-piece of molded plastics, thereby achieving production cost reduction, weight reduction, while obtaining high rigidity of the cooling fan 20.

As will be appreciated from the above, according to the present invention, the mixed flow fan is used as the cooling fan of the alternator, and therefore the number of fins of the cooling fan is reduced as compared with the conventional cooling fans, while obtaining a sufficient amount of cooling air. Therefore, the frequency of wave of condensation and rarefaction generated due to rotation of the cooling fan can be lowered to within a frequency range which is not critical as engine noise, thereby greatly reducing total engine noise containing cooling fan noise.

## Claims

1. A cooling device (12) of an automotive alternator (10) having a rotor shaft (14) and a housing (16), the cooling device having a cooling fan (20) surrounded by a shroud (26) and carried by said rotor shaft, a boss section (22) of the cooling fan (20) being secured on said rotor shaft (14) and carrying a plurality of radial fins (24), the cooling fan (20) sucking air through the alternator housing (16) from the opposite side thereof, characterized in that the boss section (22) is generally in the shape of a frustum of a cone increasing in sectional area in the direction from the upstream side toward the downstream side of said cooling fan (20) in which direction air flows when said cooling fan (20) rotates, the fins (24) being formed angularly relative to the axis (X) of the fan (20), in such a manner that an angle of attack (θ) is at least 45°, the fins (24) being arranged outside of the alternator housing (16) closely surrounded by a fan-shroud (26) which is airsealedly secured to the alternator housing (16), and in that the fan-shroud (26) is formed with upstream and downstream openings (26a, 26b) which are respectively located in the vicinity of the upstream and downstream sides of said cooling fan, said downstream opening (26b) being larger than said upstream opening (26a).

2. A cooling device as claimed in claim 1, characterized in that the fins (24) are integral with the boss section (22) forming an angle of attack of 65 degrees.

3. A cooling device as claimed in claim 1, characterized in that the number of said fins (24) is four.

4. A cooling device as claimed in claim 1, characterized in that said fan-shroud (26) is generally annular and said upstream and downstream openings (26a, 26b) being opened upstream and downstream of said cooling fan (20), respectively.

5. A cooling device as claimed in claim 2, characterized in that said boss section (22) and said fins (24) are formed as a one-piece of plastics.

**Patentansprüche**

1. Kühlvorrichtung (12) eines Kraftfahrzeug-Wechselstromgenerators (10), der eine Rotorweile (14) und ein Gehäuse (16) besitzt, wobei die Kühlvorrichtung ein Kühllüfterrad (20), das durch einen Mantel (26) umgeben und von der Rotorwelle getragen ist, aufweist, das Kühllüfterrad (20) mit einer Nabe (22) auf der Rotorwelle (14) aufgenommen ist und die Nabe eine Mehrzahl radialer Blätter (24) trägt und das Kühllüfterrad (20) Luft durch das Gehäuse (16) des Wechselstromgenerators von dessengegenüberliegender Seite hindurchsaugt, dadurch gekennzeichnet, daß die Nabe (22) im wesentlichen kegelstumpfförmig gestaltet ist und im Querschnitt in Richtung von der stromauf liegenden Seite des Kühllüfterrades (20) zur stromab liegenden Seite des Kühllüfterrades (20), d.h. in der Luftströmungsrichtung bei Rotation des Kühllüfterrades (20) zunimmt, die Blätter (24) im Winkel relativ zur Achse (X) des Lüfterrades (20) ausgebildet sind, derart, daß ein Anstellwinkel (0) zumindest 45° beträgt, die Blätter (24) außerhalb des Gehäuses (16) des Wechselstromgenerators angeordnet und eng durch einen Lüfterradmantel (26), der Luftdicht an dem Gehäuse (16) des Wechselstromgenerators befestigt ist, umgeben sind, und daß der Lüfterrad-Mantel (26) mit einer stromaufseitigen Öffnung und einer stromabseitigen Öffnung (26a, 26b) versehen ist, die jeweils in der Nähe der stromaufseitigen Seite des Kühllüfterrades und der stromabseitigen Seite des Kühllüfterrades angeordnet sind, wobei die stromabseitige Öffnung (26b) größer ist als die stromaufseitige Öffnung (26a).

2. Kühlvorrichtung nach Anspruch 1, dadurch gekennzeichnet, daß die Blätter (24) einstückig mit der Nabe (22) ausgebildet sind und einen Anstellwinkel von 65° bilden.

3. Kühlvorrichtung nach Anspruch 1, dadurch gekennzeichnet, daß die Anzahl der Blätter (24) vier beträgt.

4. Kühlvorrichtung nach Anspruch 1, dadurch gekennzeichnet, daß der Lüfterrad-Mantel (26) im wesentlichen ringförmig ist und die stromaufseitige und stromabseitige Öffnung (26a, 26b) sich jeweils stromauf und stromab des Kühllüfterrades (20) öffnen.

5. Kühlvorrichtung nach Anspruch 2, dadurch gekennzeichnet, daß die Nabe (22) und die Blätter (24) einstückig aus Kunststoff gebildet sind.

**Revendications**

1. Dispositif de refroidissement (12) pour un alternateur d'automobile (10) ayant un arbre de rotor (14) et un logement (16), le dispositif de refroidissement ayant un ventilateur de refroidissement (20) entouré d'un recouvrement (26) et porté par ledit arbre de rotor, une section en protubérance (22) du ventilateur de refroidissement (20) étant fixée sur ledit arbre de rotor (14) et portant un certain nombre d'ailettes radiales (24), le ventilateur de refroidissement (20) aspirant l'air à travers le logement de l'alternateur (16) à partir de sont côté opposé, caractérisé en ce que la section en protubérance (22) a généralement la forme d'un tronc de cône dont la section transversale croît dans la direction du côté en amont vers le côté en aval dudit ventilateur de refroidissement (20), direction dans laquelle s'écoule l'air lorsque ledit ventilateur de refroidissement (20) tourne, les ailettes (24) étant formées en angle relativement à l'axe (X) du ventilateur (20), de manière qu'un angle d'attaque (θ) soit d'au moins 45°, les ailettes (24) étant agencées en-dehors du logement (16) de l'alternateur très précisément entourées par un recouvrement (26) du ventilateur qui est fixé de manière étanche à l'air au logement (16) de l'alternateur et en ce que le recouvrement (26) du ventilateur présente des ouvertures en amont et en aval (26a, 26b) qui sont placées respectivement à proximité des côtés en amont et en aval dudit ventilateur de refroidissement, ladite ouverture (26b) en aval étant plus grande que ladite ouverture (26a) en amont.

2. Dispositif de refroidissement selon la revendication 1 caractérisé en ce que les ailettes (24) font corps avec la section en protubérance (22) en formant un angle d'attaque de 65°.

3. Dispositif de refroidissement selon la revendication 1 caractérisé en ce que le nombre desdites ailettes (24) est de quatre.

4. Dispositif de refroidissement selon la revendication 1 caractérisé en ce que ledit recouvrement (26) du ventilateur est généralement annulaire et en ce que lesdites ouvertures en amont et en aval (26a, 26b) ouvrent en amont et en aval dudit ventilateur de refroidissement (20), respectivement.

7

8

0 074 068

5. Dispositif de refroidissement selon la revendication 2 caractérisé en ce que ledite section en protubérance (22) et lesdites ailettes (24) sont
formées en une pièce en matière plastique.

FIG.1
PRIOR ART

FIG.2
PRIOR ART

FIG.3

FIG.4

FIG.5